# EUROPEAN PATENT APPLICATION

(11) **EP 4 603 962 A1**
(43) Date of publication of application: **20.08.2025**
(21) Application number: 24864260.5
(22) Date of filing: 15.07.2024
(51) Int. Cl.: G06F 3/14

(54) **DEVICE COORDINATION METHOD, ELECTRONIC DEVICE, AND STORAGE MEDIUM**

(30) Priority: 13.09.2023 CN 202311188153
(71) Applicant: ZTE Corporation, Shenzhen, Guangdong 518057 (CN)
(72) Inventor: WANG, Chi, Shenzhen, Guangdong 518057 (CN)
(74) Representative: Ziebig Hengelhaupt Intellectual Property Attorneys Patentanwaltskanzlei PartGmbB
(86) International application number: PCT/CN2024/105569
(87) International publication number: WO 2025/055536

(57) **Abstract**

Embodiments of the present disclosure provide a device coordination method, an electronic device, and a storage medium. The device coordination method is applied to a first device, and comprises: receiving a first operation of a user on a first desktop, the first desktop comprising desktop layout information of the first device; and in response to the first operation, displaying a second desktop, the second desktop comprising desktop layout information of a second device, and the second device being a device that establishes a coordinative relationship with the first device.

## Description

This application claims a priority of Chinese Patent Application No. 202311188153.9, filed on September 13, 2023, the entire content of which is incorporated into this application by reference.

### TECHNICAL FIELD

The present disclosure relates to the field of terminal technologies, and in particular, to a device collaboration method, an electronic device, and a storage medium.

### BACKGROUND

With the development of technologies of smart terminals and smart homes, a user or a family often has a plurality of electronic devices. The plurality of electronic devices may build a distributed system and form a collaboration in mutual operations, so as to complete services or functions of distributed scenarios.

### SUMMARY

In a first aspect, a device collaboration method is provided, and the device collaboration method is applied to a first device. The device collaboration method includes: receiving a first operation of a user on a first desktop, where the first desktop includes desktop layout information of the first device; and displaying a second desktop in response to the first operation, where the second desktop includes desktop layout information of a second device, and the second device is a device that has established a collaboration relationship with the first device.

In a second aspect, a collaboration apparatus is provided, and the collaboration apparatus is applied to a first device. The collaboration apparatus includes: a receiving unit, configured to receive a first operation of a user on a first desktop, where the first desktop includes desktop layout information of the first device; and a displaying unit, configured to display a second desktop in response to the first operation, where the second desktop includes desktop layout information of a second device, and the second device is a device that has established a collaboration relationship with the first device.

In a third aspect, an electronic device is provided, and the electronic device includes: a processor and a memory. The memory has stored instructions executable by the processor; and the processor is configured to, when executing the instructions, cause the electronic device to implement the method provided in the first aspect.

In a fourth aspect, a computer-readable storage medium is provided, and the computer-readable storage medium stores computer instructions. The computer instructions, when executed on a computer, cause the computer to perform the method provided in the first aspect.

In a fifth aspect, a computer program product containing computer instructions is provided, and the computer instructions, when executed on a computer, cause the computer to perform the method provided in the first aspect.

### BRIEF DESCRIPTION OF THE DRAWINGS

The drawings are used to provide a further understanding of technical solutions of the present disclosure, constitute a part of the specification, are used to explain the technical solutions of the present disclosure in conjunction with the embodiments of the present disclosure, and do not constitute a limitation on the solutions of the present disclosure.
FIG. 1 is a structural schematic diagram of a communication system according to the embodiments of the present disclosure.
FIG. 2 is a schematic flowchart of a device collaboration method according to the embodiments of the present disclosure.
FIG. 3 is a schematic diagram of an interaction of electronic devices according to the embodiments of the present disclosure.
FIG. 4 is a schematic diagram of another interaction of electronic devices according to the embodiments of the present disclosure.
FIG. 5 is a schematic flowchart of another device collaboration method according to the embodiments of the present disclosure.
FIG. 6 is a schematic flowchart of yet another device collaboration method according to the embodiments of the present disclosure.
FIG. 7 is a schematic flowchart of yet another device collaboration method according to the embodiments of the present disclosure.
FIG. 8 is a schematic flowchart of yet another device collaboration method according to the embodiments of the present disclosure.
FIG. 9 is a schematic diagram of a first selection operation according to the embodiments of the present disclosure.
FIG. 10 is a schematic flowchart of yet another device collaboration method according to the embodiments of the present disclosure.
FIG. 11 is a schematic diagram of displaying of a third desktop according to the embodiments of the present disclosure.
FIG. 12 is a schematic flowchart of yet another device collaboration method according to the embodiments of the present disclosure.
FIG. 13 is a schematic diagram of a second selection operation according to the embodiments of the present disclosure.
FIG. 14 is a schematic flowchart of yet another device collaboration method according to the embodiments of the present disclosure.
FIG. 15 is a schematic diagram of displaying of a fourth desktop according to the embodiments of the present disclosure.
FIG. 16 is a schematic flowchart of yet another device collaboration method according to the embodiments of the present disclosure.
FIG. 17 is a schematic flowchart of yet another device collaboration method according to the embodiments of the present disclosure.
FIG. 18 is a schematic flowchart of yet another device collaboration method according to the embodiments of the present disclosure.
FIG. 19 is a schematic flowchart of yet another device collaboration method according to the embodiments of the present disclosure.
FIG. 20 is an overall schematic flowchart of a device collaboration method according to the embodiments of the present disclosure.
FIG. 21 is a schematic diagram of components of a collaboration apparatus according to the embodiments of the present disclosure.
FIG. 22 is a structural schematic diagram of another electronic device according to the embodiments of the present disclosure.

### DETAILED DESCRIPTION

The technical solutions in the embodiments of the present disclosure will be described below clearly and completely in conjunction with the drawings in the embodiments of the present disclosure. Obviously, the described embodiments are merely some embodiments but not all embodiments of the present disclosure. All other embodiments obtained based on the embodiments in the present disclosure by those ordinary skilled in the art without paying any creative effort shall fall within the protection scope of the present disclosure.

Unless otherwise required in the context, throughout the entire specification and claims, the terms, "comprise" and other forms thereof, e.g., the third-person singular form "comprises" and the present participle form "comprising", are construed as open and inclusive meaning, i.e., "include/comprise/contain, but not limited to". In the description of the specification, the terms, "one/an embodiment", "some embodiments", "exemplary embodiments", "example", "specific example" or "some examples", etc., are intended to indicate that specific features, structures, materials or characteristics related to this embodiment or example are included in at least one embodiment or example of the present disclosure. Schematic representation of the terms mentioned above does not necessarily refer to the same embodiment or example. In addition, the stated specific features, structures, materials or characteristics may be included in any one or more embodiments or examples in any suitable manner.

The terms, "first" and "second", etc., are used for descriptive purposes only, and are not to be construed as indicating or implying a relative importance or implicitly indicating the number of indicated technical features. Thus, features defined with "first" or "second", etc., may explicitly or implicitly include one or more of the features. In the description of the present disclosure, "a/the plurality of / multiple" means two or more than two, unless otherwise stated.

In the embodiments of the present disclosure, the words, "exemplary (exemplarily)" or "for example", etc., are used to describe an example, an illustration, or an explanation. Any embodiment or design solution described with "exemplary (exemplarily)" or "for example", etc., in the embodiments of the present disclosure should not be construed as preferred or advantageous over other embodiments or designs. Rather, the usage of the words, "exemplary (exemplarily)" or "for example", etc., is intended to present relevant concepts in a specific manner.

In addition, the usage of "based on" is meant to be open and inclusive, since a process, step, calculation or other actions that is "based on" one or more of the stated conditions or values may, in practice, be based on additional conditions or values exceeding those stated.

As types of electronic devices gradually increase, a user may be equipped with electronic devices at the same time, such as a notebook computer, PAD, mobile phone, smart large screen, smart watch, and smart car machine configured in a smart vehicle, etc. How to manage various electronic devices mentioned above more conveniently, so as to enable the interconnection and interoperability between various electronic devices mentioned above, to form a set of intelligent ecosystem that may be freely combined in a near field, and to establish intelligent collaborative interactions between the plurality of electronic devices, gradually becomes a hot spot for product innovation. For example, a type of collaboration between devices in the related art is to achieve collaboration between a mobile phone and a tablet computer (e.g., a PAD), a computer, or a television through a screen casting function.

Currently, in a multi-device collaboration scenario, there are often the following 3 problems.
1. A function entrance is relatively deep. A typical entrance is to: pull down a status bar of the electronic device, enter a setting menu of the electronic device, and initiate a near-field device discovery through a menu entrance of the electronic device, so as to establish a collaboration relationship for the electronic device.
2. An operation of establishing the collaboration relationship for the electronic device is relatively complicated, and operations need to be performed separately on the electronic devices at two sides between which the collaboration relationship is to be established. The interactive process has many steps, and the user needs to undergo some learning. For example, these operations (a screen casting operation, cross-device copy and paste, pushing an application to a peer electronic device through a recent application list, or pulling up an application of a peer electronic device in a docker area to cast its screen to the local electronic device) are relatively complicated and have a certain operational threshold for the user to master.
3. The user needs to understand some relatively abstract concepts, such as pushing, pulling up, mirroring screen casting, heterogeneous display screen casting, super terminal, one-touch connecting, one-touch pulling up, etc.

In summary, currently, in the scenario of multi-device collaboration work, the operations are relatively cumbersome and the experience of the user is not good.

Based on this, the embodiments of the present disclosure provide a device collaboration method, an electronic device, and a storage medium: after a first device receives a first operation of a user on a first desktop of the first device, the first device may display a second desktop, and the second desktop includes desktop layout information of a second device that has established a collaboration relationship with the first device. It should be understood that: the second device being a device that has established the collaboration relationship with the first device may be construed as an electronic device with which the user is equipped, and the user knows how to operate the second device. Therefore, the first device displays the second desktop including the desktop layout information of the second device. The user does not need to relearn the operation for the second device and the user does not need to understand some abstract concepts. The user may directly operate the second device on the second desktop to achieve multi-device collaboration work, which is convenient to operate, reduces the complexity of the operation when multiple devices work collaboratively, and contributes to improve the usage experience of the user.

The solutions in the embodiments of the present disclosure are introduced below in conjunction with the drawings.

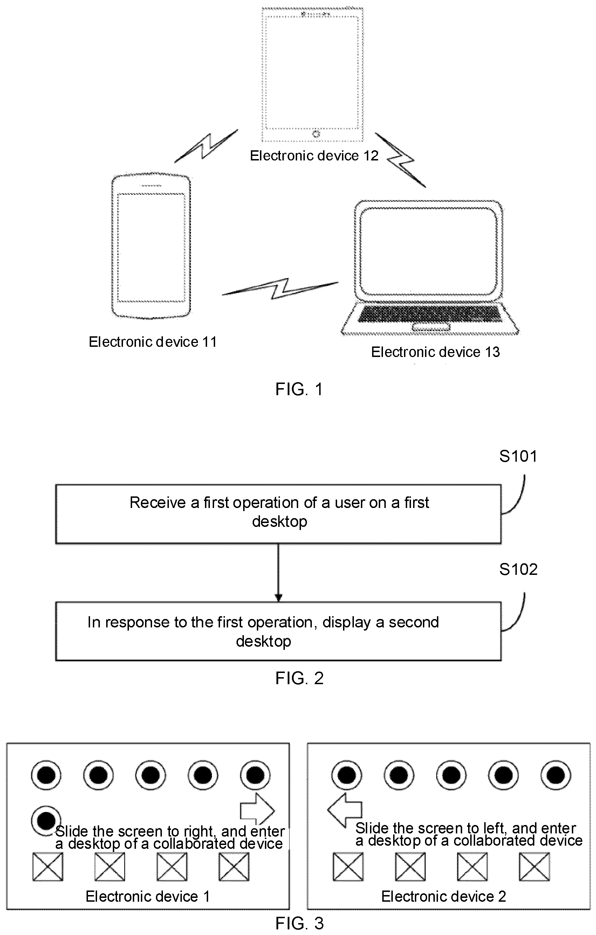

FIG. 1 is a structural schematic diagram of a communication system according to the embodiments of the present disclosure. Referring to FIG. 1, the communication system may include a plurality of electronic devices (e.g., an electronic device 11, an electronic device 12, and an electronic device 13).

For each electronic device of the plurality of electronic devices, the electronic device may be a device, such as a mobile phone, a PC (Personal Computer), a tablet computer, a desktop (desktop computer), a handheld computer, a notebook computer (laptop), an ultra-mobile personal computer (UMPC), a netbook, a personal digital assistant (PDA), a router, a television, an electronic voice recorder, etc. Or, the electronic device may include a device that may access a home wireless local area network, such as a speaker, a camera, an air conditioner, a refrigerator, a smart curtain, a projector, a desk lamp, a chandelier, an electric cooker, a security equipment (e.g., a smart electronic lock), a robot, a sweeping machine, and a smart scale, etc. Or, the electronic device may include a wearable device, such as a smart headphone, smart glasses, a smart watch, a smart bracelet, an augmented reality (AR) / virtual reality (VR) device, a wireless locator, a tracker, an electronic collar, etc. The embodiments of the present disclosure do not limit specially the form of the electronic device.

Continuing as shown in FIG. 1, the embodiments of the present disclosure take the electronic device 11 being a mobile phone, the electronic device 12 being a tablet computer, and the electronic device 13 being a notebook computer as an example to illustrate a device collaboration method provided in the embodiments of the present disclosure.

In some embodiments, the plurality of electronic devices in the communication system may be connected with each other through a wired network or a wireless network.

As an example, the wired network or the wireless network mentioned above may be implemented by using any known network communication protocol, such as Ethernet, universal serial bus (USB), FIREWIRE, global system for mobile communications (GSM), general packet radio service (GPRS), code division multiple access (CDMA), wideband code division multiple access (WCDMA), time-division code division multiple access (Time Division-Synchronous Code Division Multiple Access, TD-SCDMA), long term evolution (LTE), bluetooth (BLE), wireless fidelity (WIFI), near range wireless communication technology (near field communication, NFC), voice calling over internet protocol (voice over Internet protocol, VoIP), communication protocol supporting a network slice architecture, or any other suitable communication protocol.

Exemplarily, the plurality of electronic devices in the communication system may establish a communication connection through a same WIFI network. In addition, the plurality of electronic devices in the communication system may also establish a communication connection by logging into a same user account.

It should be understood that FIG. 1 is an exemplary structural diagram, and the number of electronic devices included in the communication system shown in FIG. 1 is not limited. Furthermore, in addition to the electronic devices shown in FIG. 1, the communication system shown in FIG. 1 may further include other devices, which is not limited thereto.

Next, as shown in FIG. 2, the embodiments of the present disclosure provide a device collaboration method, and the device collaboration method is applied to a first device. The first device may be a device among the plurality of electronic devices in the communication system shown in FIG. 1 mentioned above. For example, the first device is the electronic device 11 shown in FIG. 1 mentioned above. In some embodiments, the first device may be pre-set, or may also be determined based on an operation from a user. For example, among the plurality of electronic devices, an electronic device awakened by the user is the first device, which is not limited in the embodiments of the present disclosure. The device collaboration method includes the following S101 and S102.

In S101, receive a first operation of a user on a first desktop.

In some embodiments, in a case where the user requires multi-device collaboration work, the user gives the first operation on the first desktop of the first device, and accordingly, the first device receives the first operation of the user on the first desktop. The first device may also have other names, e.g., a central device.

As an example, the first desktop is a last desktop of the first device in a preset direction, and the first operation includes a sliding operation in the preset direction. The preset direction includes a left direction and a right direction.

Exemplarily, the preset direction as the right direction is taken as an example. It is assumed that the first device includes three desktops, i.e., a desktop 1, a desktop 2 and a desktop 3, in an order from left to right. The desktop 3 is the last desktop of the first device in the right direction, the desktop 3 is the first desktop, and the first operation may be a right sliding operation on the desktop 3.

In some embodiments, the first desktop includes desktop layout information of the first device. The desktop layout information includes at least one of: an icon of an application, a name of the application, a desktop background, an icon of a folder, a name of the folder, a status bar, or a notification bar. It should be understood that the contents included in the desktop layout information mentioned above are only exemplary, and those skilled in the art may make corresponding adjustments to the desktop layout information according to actual application scenarios, which is not limited in the embodiments of the present disclosure.

In S102, display a second desktop in response to the first operation.

The second desktop includes desktop layout information of a second desktop, and the second device is a device that has established a collaboration relationship with the first device. For the description for the desktop layout information of the second desktop, reference may be made to the description for the desktop layout information of the first desktop mentioned above, which will not be repeated here. For the description for how the first device establishes the collaboration relationship with the second device, reference may be made to the description of the following S701 and S702, or to the description of the following S801 to S803, which will not be repeated here.

**In** some embodiments, the second device may also have other names, e.g., a collaborated device.

**In** some embodiments, the second desktop further includes an identifier of the second device, and the identifier of the second device is used to uniquely indicate the second device, for example, the identifier of the second device may be a name of the second device.

**It** should be understood that the second desktop further includes an identifier of the second device, so that the user determines which device currently establishes the collaboration relationship with the first device, based on the identifier of the second device displayed on the second desktop.

In some embodiments, the second desktop is determined by the first device based on a screen display parameter of the first device and a screen display parameter of the second device, and the screen display parameter of the first device or the screen display parameter of the second device includes at least one of: a screen size, a screen resolution, or a screen pixel density.

It should be understood that the first device may be an electronic device different from the second device, and screen display parameters of different electronic devices are different from each other. If the first device displays the second desktop by the screen display parameter of the second device, the second desktop displayed by the first device may not normally exhibit the desktop layout information of the second device. For example, it is assumed that the first device is a mobile phone and the second device is a tablet computer. A screen display parameter of the mobile phone is quite different from a screen display parameter of the tablet computer. If the mobile phone displays the desktop layout information of the tablet computer by the screen display parameter of the tablet computer, that is, the mobile phone displays the second desktop, it may result in that the desktop layout information of the tablet computer is not fully displayed on the second desktop, thereby affecting the usage experience of the user. For another example, it is assumed that the first device is a tablet computer and the second device is a mobile phone. If the tablet computer displays the desktop layout information of the mobile phone by a screen display parameter of the mobile phone, it may result in that the desktop layout information of the mobile phone displayed on the second desktop of the tablet computer is too small, thereby affecting the usage experience of the user.

Therefore, in the embodiments of the present disclosure, the second desktop is determined by the first device based on the screen display parameter of the first device and the screen display parameter of the second device, that is, in a device collaboration method provided in the embodiments of the present disclosure, the second desktop has been adaptively adjusted by the first device based on the screen display parameter of the first device and the screen display parameter of the second device, and the first device has a screen adaptation function, so that the second desktop displayed by the first device can normally display the desktop layout information of the second device, thereby contributing to improve the usage experience of the user.

In some embodiments, the collaboration relationship between the first device and the second device may be established based on the following two manners.

Manner 1: in a case where the first device and the second device are connected to a same local area network, the collaboration relationship mentioned above is established based on the local area network.

As an example, the local area network may be a wireless local area network (WLAN).

Manner 2: in a case where the first device and the second device are not connected to a same local area network, the collaboration relationship mentioned above is established based on a wireless fidelity peer-to-peer (P2P) (WIFI P2P) protocol.

It should be understood that in a case where the collaboration relationship is established based on the WIFI P2P protocol, the first device is a group owner (GO) in a WIFI P2P connection, and the second device is a group client (GC) in the WIFI P2P connection. GO and GC may constitute a multi-device wireless network. In this way, the collaboration relationship between multiple devices may be achieved. For example, it is achieved that multiple GCs establish a screen casting relationship with GO simultaneously.

In some embodiments, in a case where the collaboration relationship is established based on the WIFI P2P protocol, since the first device serves as a GO for the WIFI P2P connection, the first device is a certain fixed electronic device. If other electronic device is replaced as the first device, the current first device will disconnect the existing WIFI P2P connection with the second device, and then a WIFI P2P connection with a new first device as GO is re-established, so as to ensure that the collaborated device (the second device) as GC can only communicate with the central device (the first device) as GO.

It should be understood that ensuring that the collaborated device (the second device) as GC can only communicate with the central device (the first device) as GO, may shorten screen casting duration that has more energy consumption, and may contribute to reduce the energy consumption of the first device and the second device.

The embodiment shown in FIG. 2 is illustrated below in conjunction with an example. For example, it is assumed that the communication system shown in FIG. 1 includes an electronic device 1 and an electronic device 2, and both the electronic device 1 and the electronic device 2 are taken as tablet computers as an example. As shown in FIG. 3, in a case where the electronic device currently operated by the user is the electronic device 1, the electronic device 1 is the first device, and the electronic device 2 is the second device. The user slides the screen to the right on a desktop of the electronic device 1 and may enter a desktop of the electronic device 2, that is, the electronic device 1 displays the desktop of the electronic device 2. Similarly, continuing as shown in FIG. 3, in a case where the electronic device currently operated by the user is the electronic device 2, the electronic device 2 is the first device, and the electronic device 1 is the second device. The user slides the screen to the left on the desktop of the electronic device 2 and may enter the desktop of the electronic device 1, that is, the electronic device 2 displays the desktop of the electronic device 1.

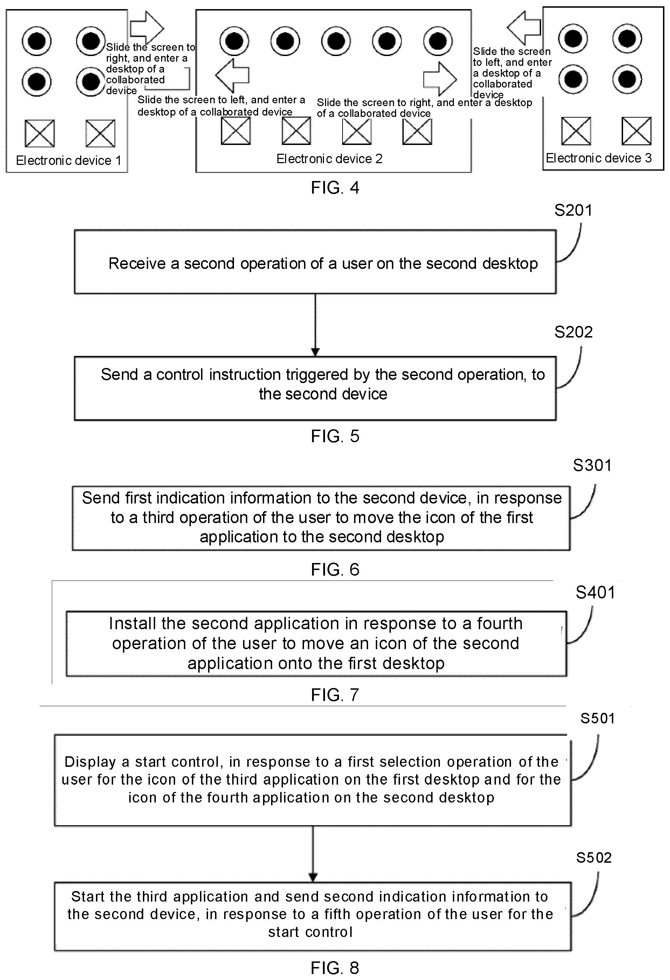

For another example, it is assumed that the communication system shown in FIG. 1 includes an electronic device 1, an electronic device 2, and an electronic device 3; and both the electronic device 1 and the electronic device 3 are taken as mobile phones and the electronic device 2 is taken as a tablet computer, as an example. As shown in FIG. 4, the electronic device currently operated by the user is taken as the electronic device 1 as an example. The electronic device 1 is the first device, and the electronic device 2 and the electronic device 3 are the second devices. The user slides a screen to the right on a desktop of the electronic device 1 and may enter a desktop of the electronic device 2, that is, the electronic device 1 displays the desktop of the electronic device 2. Similarly, continuing as shown in FIG. 4, in a case where the electronic device currently operated by the user is the electronic device 2, the electronic device 2 is the first device, and the electronic device 1 and the electronic device 3 are the second devices. The user slides a screen to the left on the desktop of the electronic device 2 and may enter the desktop of the electronic device 1, that is, the electronic device 2 displays the desktop of the electronic device 1. The user slides the screen to the right on the desktop of the electronic device 2 and may enter a desktop of the electronic device 3, that is, the electronic device 2 displays the desktop of the electronic device 3. In a case where the electronic device currently operated by the user is the electronic device 3, the electronic device 3 is the first device, and the electronic device 1 and the electronic device 2 are the second devices. The user slides a screen to the left on the desktop of the electronic device 3 and may enter the desktop of the electronic device 2, that is, the electronic device 3 displays the desktop of the electronic device 2.

Based on the embodiment shown in FIG. 2, after the first device receives the first operation of the user on the first desktop of the first device, the first device may display the second desktop, and the second desktop includes the desktop layout information of the second device that has established the collaboration relationship with the first device. It should be understood that the second device being a device that has established the collaboration relationship with the first device, may be construed as an electronic device with which the user is equipped, and the user knows how to operate the second device. Therefore, the first device displays the second desktop including the desktop layout information of the second device, and the user does not need to re-learn the operation for the second device and the user does not need to understand some abstract concepts. The user may browse, on the second desktop of the first device, application and resource information of the second device, and then directly control, on the second desktop of the first device, the second device, to achieve multi-device collaboration work, which is convenient to operate, reduces the complexity of the operation when multiple devices work collaboratively, and contributes to improve the usage experience of the user. Also, in the embodiments of the present disclosure, the user only needs to give the first operation, and then the first device may display the second desktop. The user does not need to wait for the duration consumed by the first device to establish the collaboration relationship with the second device, which further contributes to improve the usage experience of the user.

In some embodiments, as shown in FIG. 5, after S102, the device collaboration method may further include the following S201 and S202.

In S201, receive a second operation of the user on the second desktop.

In some embodiments, after the first device displays the second desktop, in a case where the user needs to control the second device, the user may give, on the second desktop, the second operation. Accordingly, the first device receives, on the second desktop, the second operation of the user.

For example, in a case where the user needs to use a certain application installed on the second device, the user may perform a click operation on an icon of the application on the second desktop, and then the first device receives, on the second desktop, the click operation of the user.

In S202, send a control instruction triggered by the second operation, to the second device.

Exemplarily, in a case where the user needs to use a certain application installed on the second device, the user may perform a click operation on an icon of the application on the second desktop. After the first device receives the click operation of the user on the second desktop, the first device determines that the user needs to start the application, and then the first device sends a start instruction for starting the application and triggered by the click operation, to the second device, so that the second device starts the application corresponding to the start instruction based on the start instruction.

Based on the embodiment shown in FIG. 5, after the first device receives the second operation of the user on the second desktop, the first device sends the control instruction triggered by the second operation to the second device, so that the second device executes the control instruction triggered by the second operation, thereby achieving the access of cross-device resources or applications, and achieving that the control for the second device can be completed on the first device, which does not require a cross-device touch, which is convenient to operate, thereby reducing the complexity of the operation when multiple devices work collaboratively, and contributing to improve the usage experience of the user.

In some embodiments, the first desktop at least includes an icon of a first application. Based on this, as shown in FIG. 6, after S102, the device collaboration method may further include the following S301.

In S301, send first indication information to the second device, in response to a third operation of the user to move the icon of the first application to the second desktop.

In some embodiments, when the user needs to install the first application displayed on the first desktop onto the second device, the user may give the third operation of moving the icon of the first application to the second desktop, on the first desktop, to the first device. Accordingly, the first device receives the third operation. The first desktop includes an icon of at least one application, and the first application is an application of the at least one application.

Exemplarily, when the user needs to install the first application displayed on the first desktop onto the second device, the user may long press the icon of the first application on the first desktop, or quickly click the icon of the first application, to select the icon of the first application; then press the icon of the first application and slide the screen to the right or slide the screen to the left to enter the second desktop; and then release the icon of the first application on the second desktop. In this way, the third operation of moving the icon of the first application to the second desktop is completed. It should be noted that the above description for the third operation is merely exemplary, and those skilled in the art may make adaptive adjustments according to actual application scenarios, which is not limited in the embodiments of the present disclosure.

After the third operation is received by the first device, the first device sends first indication information to the second device in response to the third operation, and the first indication information is used to indicate the second device to install the first application. In this way, the cross-device application installation is completed.

As an example, the first indication information includes an installation package of the first application, so that the second device quickly installs the first application based on the installation package of the first application.

In some embodiments, the second desktop at least includes an icon of a second application. Based on this, as shown in FIG. 7, after S102, the device collaboration method may further include the following S401.

In S401, install the second application, in response to a fourth operation of the user to move the icon of the second application to the first desktop.

In some embodiments, when the user needs to install the second application displayed on the second desktop onto the first device, the user may give, the fourth operation of moving the icon of the second application to the first desktop, on the second desktop, to the first device. Accordingly, the first device receives the fourth operation. The second desktop includes an icon of at least one application, and the second application is an application of the at least one application.

Exemplarily, when the user needs to install the second application displayed on the second desktop onto the first device, the user may long press the icon of the second application on the second desktop, or quickly click the icon of the second application, to select the icon of the second application; then press the icon of the second application and slide the screen to the right or slide the screen to the left, to enter the first desktop, and then release the icon of the second application on the first desktop. In this way, the fourth operation of moving the icon of the second application to the first desktop is completed. It should be noted that the above description for the fourth operation is merely exemplary, and those skilled in the art may make adaptive adjustments according to actual application scenarios, which is not limited in the embodiments of the present disclosure.

After the fourth operation is received by the first device, the first device installs the second application in response to the fourth operation.

As an example, that the first device installs the second application, may be that the first device sends request information to the second device, and the request information is used to request an installation package of the second application. Then, the first device receives response information for the request information, sent from the second device, and the response information may include the installation package of the second application. Then, the first device may install the second application based on the installation package of the second application.

As another example, that the first device installs the second application, may also be that the first device acquires the installation package of the second application from an application market which is based on the first device's own configuration, and then installs the second application based on an acquired installation package of the second application.

Based on the embodiment of FIG. 6 or FIG. 7, in the device collaboration method provided in the embodiments of the present disclosure, the second device may be not operated and cross-device application installation may be completed on the first device, which is convenient to operate, reduces the complexity of the operation when multiple devices work collaboratively, and contributes to improve the usage experience of the user.

It should be noted that the above embodiments are explained by taking the third operation or the fourth operation to implement the cross-device application installation as an example. In some embodiments, the third operation or the fourth operation may also be applied to a cross-device data copy and paste process, which is not limited in the embodiments of the present disclosure.

In some embodiments, the first desktop at least includes an icon of a third application, the second desktop at least includes an icon of a fourth application, and the third application is different from the fourth application. Based on this, as shown in FIG. 8, after S102, the device collaboration method may further include the following S501 and S502.

In S501, display a start control, in response to a first selection operation of the user for the icon of the third application on the first desktop and for the icon of the fourth application on the second desktop.

In some embodiments, in a case where the user needs to start the third application on the first desktop and the fourth application on the second desktop, the user may give the first selection operation for the icon of the third application on the first desktop and for the icon of the fourth application on the second desktop. Accordingly, the first device receives the first selection operation of the user for the icon of the third application on the first desktop and for the icon of the fourth application on the second desktop.

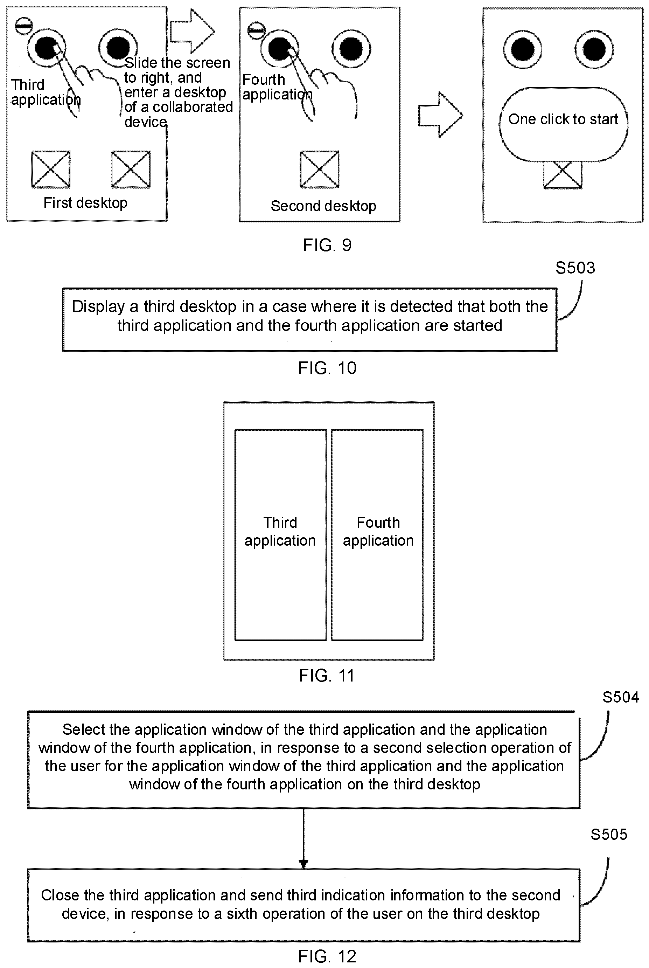

Exemplarily, as shown in FIG. 9, in a case where the user needs to start the third application on the first desktop and the fourth application on the second desktop, the user may long press the icon of the third application on the first desktop, or quickly click the icon of the third application, to select the icon of the third application, and then slide the screen to the right or slide the screen to the left to enter the second desktop, and then long press the icon of the fourth application on the second desktop, or quickly click the icon of the fourth application, to select the icon of the fourth application. **In** this way, the first selection operation for the icon of the third application on the first desktop and for the icon of the fourth application on the second desktop is completed. **It** should be noted that the above explanation for the first selection operation is merely exemplary, and those skilled in the art may make adaptive adjustments according to actual application scenarios, which is not limited in the embodiments of the present disclosure.

After the first selection operation is received by the first device, the first device displays a start control in response to the first selection operation. The start control may be displayed at a top of the screen of the first device, may also be displayed in a middle of the screen of the first device, or may also be displayed at a bottom of the screen of the first device. The embodiments of the present disclosure do not limit the display position of the start control.

Exemplarily, continuing as shown in FIG. 9 mentioned above, a content displayed by the start control may be "one click to start".

In S502, start the third application and send second indication information to the second device, in response to a fifth operation of the user for the start control.

In some embodiments, after the first device displays the start control, in a case where the user determines that the third application and the fourth application need to be started, the user may give the fifth operation for the start control. Accordingly, the first device receives the fifth operation of the user for the start control, and in response to the fifth operation, starts the third application and sends the second indication information to the second device. The second indication information is used to indicate to start the fourth application.

In some embodiments, the fifth operation may be a single-click operation, a double-click operation, etc., which is not limited in the embodiments of the present disclosure.

Based on the embodiment shown in FIG. 8, when the user needs to start an application on the first device and an application on the second device, the first selection operation may be given for the application on the first device and the application on the second device. After the first selection operation is received by the first device, the first device displays the start control, and then after the fifth operation of the user for the start control is received, the first device starts the application on the first device and sends the second indication information to the second device, to indicate the second device to start the application on the second device. In this way, the user only needs to operate on the first device to achieve "one click to start" for the cross-device applications, and a cross-device touch is not required, which is convenient to operate, reduces the complexity of the operation when multiple devices work collaboratively, and contributes to improve the usage experience of the user.

In some embodiments, as shown in FIG. 10, after S502, the device collaboration method further includes the following S503.

In S503, display a third desktop in a case where it is detected that both the third application and the fourth application are started.

In some embodiments, after the first device starts the third application, and sends the second indication information to the second device to indicate the second device to start the fourth application, the first device detects whether both the third application and the fourth application are started. In a case where it is detected that both the third application and the fourth application are started, the first device displays the third desktop, and the third desktop includes an application window of the third application and an application window of the fourth application.

As an example, that the first device detects whether both the third application and the fourth application are started may be that: the first device determines that both the third application and the fourth application are started, in a case where the first device has detected that the third application has been started and has received start indication information sent from the second device. The start indication information is used to indicate that the fourth application has been started.

It should be understood that, in a case where the first device detects that both the third application and the fourth application are started, the first device displays the third desktop. The third desktop includes the application window of the third application and the application window of the fourth application, thereby achieving the displaying of application running states of cross-device applications on the same device, so that the user centrally controls the third application and the fourth application on the third desktop, and a cross-device touch is not required, which is convenient to operate, reduces the complexity of the operation when multiple devices work collaboratively, and contributes to improve the usage experience of the user.

Exemplarily, FIG. 11 is a schematic diagram of displaying of a third desktop according to the embodiments of the present disclosure. Referring to FIG. 11, the third desktop includes an application window of the third application and an application window of the fourth application. It should be noted that a size of the application window of the third application and a size of the application window of the fourth application shown in FIG. 11 are consistent and are merely exemplary, and the embodiments of the present disclosure do not limit display patterns, display sizes, display positions, etc., of the application window of the third application and the application window of the fourth application displayed on the third desktop.

In some embodiments, as shown in FIG. 12, after S503, the device collaboration method further includes the following S504 and S505.

In S504, select the application window of the third application and the application window of the fourth application, in response to a second selection operation of the user for the application window of the third application and the application window of the fourth application on the third desktop.

In some embodiments, in a case where the user needs to close the third application and the fourth application, the user may give the second selection operation for the application window of the third application and the application window of the fourth application on the third desktop, to select the application window of the third application and the application window of the fourth application. Accordingly, the first device receives the second selection operation on the third desktop, and selects the application window of the third application and the application window of the fourth application in response to the second selection operation.

As an example, in a case where the user needs to close the third application and the fourth application, the user may long press the application window of the third application on the third desktop, or quickly click the application window of the third application, to select the application window of the third application; and long press the application window of the fourth application on the second desktop, or quickly click the application window of the fourth application, to select the application window of the fourth application. In this way, the second selection operation for the application window of the third application and the application window of the fourth application on the third desktop is completed.

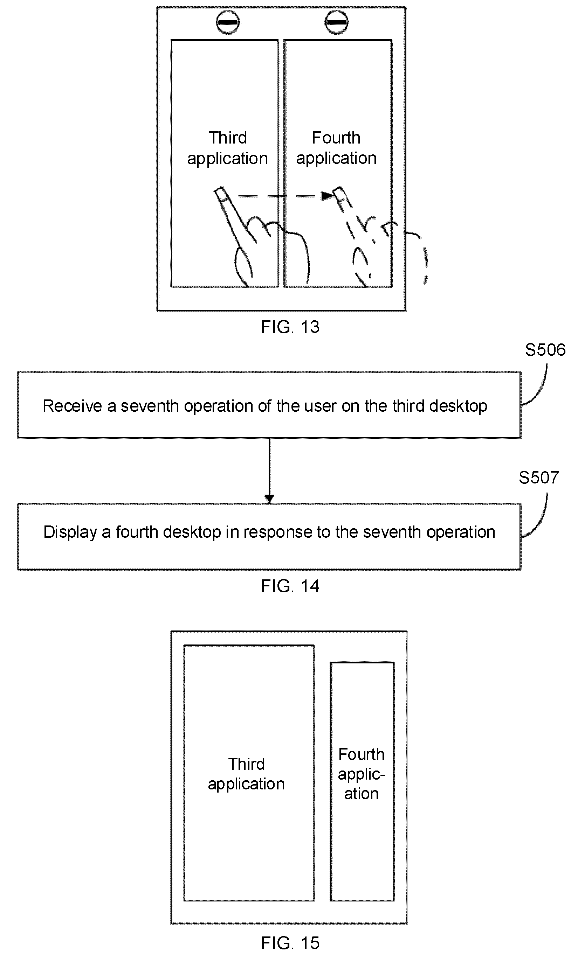

As another example, as shown in FIG. 13, in a case where the user needs to close the third application and the fourth application, the user may also slide, with a single finger, across the application window of the third application and the application window of the fourth application on the third desktop, so as to implement the second selection operation for the application window of the third application and the application window of the fourth application on the third desktop. It should be noted that the above explanations for the second selection operation are merely exemplary, and those skilled in the art may make adaptive adjustments according to actual application scenarios, which is not limited in the embodiments of the present disclosure.

Then, the first device selects the application window of the third application and the application window of the fourth application in response to the second selection operation.

In S505, close the third application and send third indication information to the second device, in response to a sixth operation of the user on the third desktop.

In some embodiments, after the first device selects the application window of the third application and the application window of the fourth application, and in a case where the user determines to close the third application and the fourth application, the user may give the sixth operation on the third desktop to indicate to close the third application and the fourth application. Accordingly, the first device receives the sixth operation on the third desktop, and in response to the sixth operation, closes the third application and sends the third indication information to the second device. The third indication information is used to indicate to close the fourth application.

As an example, the sixth operation may be a three-finger push-down operation.

It should be understood that closing the third application and sending the third indication information to the second device in response to the sixth operation of the user on the third desktop, achieves "one click to close" of the cross-device applications on the first device, without a cross-device touch, which is convenient to operate, reduces the complexity of the operation when multiple devices work collaboratively, and contributes to improve the usage experience of the user.

In some embodiments, as shown in FIG. 14, after S503, the device collaboration method further includes the following S506 and S507.

In S506, receive a seventh operation of the user on the third desktop.

In some embodiments, after the first device displays the third desktop, and in a case where the user needs to adjust the size of the application window of the third application and the size of the application window of the fourth application, the user may give the seventh operation on the third desktop. The seventh operation is used to adjust the size of the application window of the third application and the size of the application window of the fourth application.

As an example, the seventh operation may be an operation of drawing a round (circle) with a single finger.

In S507, display a fourth desktop in response to the seventh operation.

The fourth desktop includes an adjusted application window of the third application and an adjusted application window of the fourth application.

In conjunction with the embodiments shown in FIG. 14, as shown in FIG. 15, FIG. 15 is a schematic diagram of displaying of a fourth desktop according to the embodiments of the present disclosure. Referring to FIG. 15, before the first device responds to the seventh operation, the size of the application window of the third application displayed on the third desktop is consistent with the size of the application window of the fourth application displayed on the third desktop. After the first device responds to the seventh operation, the size of the application window of the third application displayed on the fourth desktop is larger than the size of the application window of the fourth application displayed on the fourth desktop, so that an adjusted application window of the third application is displayed prominently.

It should be noted that it is merely exemplary that the size of the application window of the third application displayed on the fourth desktop is larger than the size of the application window of the fourth application displayed on the fourth desktop. Those skilled in the art may also adjust sizes, display positions, and display order of the adjusted application window of the third application and the adjusted application window of the fourth application according to actual application scenarios, which is not limited in the embodiments of the present disclosure.

Based on the embodiment shown in FIG. 14, in a case where the user needs to adjust the size of the application window of the third application and the size of the application window of the fourth application, the user only needs to give the seventh operation, and then in response to the seventh operation, the first device may display the adjusted application window of the third application and the adjusted application window of the fourth application, without a cross-device touch, which is convenient to operate, reduces the complexity of the operation when multiple devices work collaboratively, and contributes to improve the usage experience of the user.

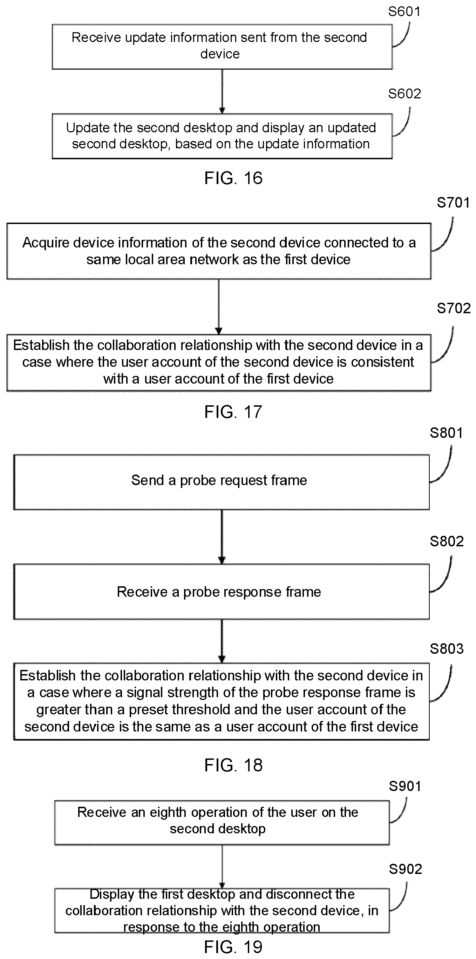

In some embodiments, as shown in FIG. 16, after S102, the device collaboration method may further include the following S601 and S602.

In S601, receive update information sent from the second device.

In some embodiments, in a case where the second device detects that the desktop layout information of the second device is changed, the second device sends the update information to the first device. The update information includes information about a change in the desktop layout information of the second device. Accordingly, the first device receives the update information sent from the second device.

In S602, update the second desktop and display an updated second desktop, based on the update information.

The updated second desktop includes the update information.

Exemplarily, the second device as a mobile phone is taken as an example. In a case where the second device receives a new text message, a notification bar of the second device displays a prompt of the new text message, that is, the notification bar of the second device is changed; and then the second device sends the update information to the first device, where the update information includes a changed notification bar.

It should be noted that after the first device establishes the collaboration relationship with the second device, the second device will transmit the desktop layout information of the second device to the first device, so that the first device generates a second desktop and displays the second desktop, based on the desktop layout information of the second device. After the first device receives the desktop layout information of the second device transmitted by the second device, the first device generates the second desktop and displays the second desktop, and the first device locally caches the desktop layout information of the second device, so that in a case where the desktop layout information of the second device is changed, the second device only needs to send information about a change in the desktop layout information of the second device to the first device, that is, the second device only needs to send the update information to the first device, thereby reducing an amount of data sent from the second device to the first device, which contributes to reduce energy consumption of the first device and the second device.

In some embodiments, when at least one of the first device and the second device is in a non-WLAN mode, the second device may send the desktop layout information and the update information of the second device to the first device based on the bluetooth. In this way, the power consumption of the first device and the power consumption of the second device can be reduced.

The above embodiments are exemplary explanations after the first device establishes the collaboration relationship with the second device. In some embodiments, as shown in FIG. 17, before S102, the device collaboration method may further include the following S701 and S702.

In S701, acquire device information of the second device connected to a same local area network as the first device.

In some embodiments, after the first device receives the first operation of the user on the first desktop, the first device determines that the user needs to use multi-device collaboration work. Therefore, the first device acquires the device information of the second device connected to the same local area network as the first device, so as to establish the collaboration relationship with the second device, to achieve multi-device collaboration work. The device information of the second device includes a user account of the second device.

In some embodiments, when the first device is in a local area network mode, the first device acquires the device information of the second device connected to the same local area network as the first device.

As an example, the local area network is a WLAN.

In S702, establish the collaboration relationship with the second device in a case where the user account of the second device is consistent with a user account of the first device.

It should be understood that in a case where the user account of the second device is consistent with the user account of the first device, it means that the second device and the first device are electronic devices belonging to the same user, and the first device can establish the collaboration relationship with the second device.

In some embodiments, establishing the collaboration relationship with the second device may be to establish the collaboration relationship with the second device based on a WLAN.

In some embodiments, the collaboration relationship includes a screen casting relationship.

The embodiments mentioned above are explained by taking an example where the user account of the second device is consistent with the user account of the first device. In some embodiments, in a case where the user account of the second device is not consistent with the user account of the first device, the first device gives first prompt information, and the first prompt information includes an identifier of the second device. The first prompt information is used to prompt to establish the collaboration relationship between the first device and the second device. The identifier of the second device is used to uniquely indicate the second device, for example, the identifier of the second device may be a name of the second device, so that the user establishes the collaboration relationship between the first device and the second device based on the identifier of the second device.

It should be understood that in a case where the user account of the second device is not consistent with the user account of the first device, it means that the second device and the first device may not be electronic devices belonging to the same user, and the first device cannot directly establish the collaboration relationship with the second device. Therefore, the first device gives the first prompt information to prompt the user to establish the collaboration relationship between the first device and the second device through a binding authorization operation.

In some embodiments, as shown in FIG. 18, before S102, the device collaboration method may further include the following S801 to S803.

In S801, send a probe request frame.

In some embodiments, after the first device receives the first operation of the user on the first desktop, the first device determines that the user needs to use multi-device collaboration work, so the first device sends the probe request frame. The probe request frame is used to discover the second device.

In some embodiments, when the first device is in a non-local area network mode, the first device sends the probe request frame in a form of broadcasting.

In S802, receive a probe response frame.

In some embodiments, after the second device receives the probe request frame, the second device sends the probe response frame in response to the probe request frame. The probe response frame includes device information of the second device that sends the probe response frame, and the device information of the second device includes a user account of the second device. Accordingly, the first device receives the probe response frame sent from the second device.

In S803, establish the collaboration relationship with the second device in a case where a signal strength of the probe response frame is greater than a preset threshold and the user account of the second device is the same as a user account of the first device.

It should be understood that the signal strength of the probe response frame sent from the second device is related to a distance between the second device and the first device; and the stronger the signal strength is, the closer the distance to the first device is. In a case where the signal strength of the probe response frame is greater than the preset threshold, it means that the distance between the second device and the first device is within a certain range. In this case, the first device establishes the collaboration relationship with the second device, which can reduce the power consumption of the first device and the power consumption of the second device when the first device and the second device work collaboratively. That the user account of the second device is the same as the user account of the first device, means that the second device and the first device are electronic devices belonging to the same user, and can establish the collaboration relationship. Therefore, in the case where the signal strength of the probe response frame is greater than the preset threshold and the user account of the second device is the same as the user account of the first device, it means that: the distance between the first device and the second device is small and the user accounts are the same, and the first device can establish the collaboration relationship with the second device. The preset threshold may be preset by a manager, which is not limited in the embodiments of the present disclosure.

As an example, that the first device establishes the collaboration relationship with the second device, may be that the first device establishes the collaboration relationship with the second device based on BLE+WIFI P2P.

In some embodiments, the collaboration relationship includes a screen casting relationship.

The embodiment mentioned above is explained by taking an example where the signal strength of the probe response frame is greater than the preset threshold and the user account of the second device is the same as the user account of the first device. In some embodiments, in a case where the signal strength of the probe response frame is greater than the preset threshold and the user account of the second device is different from the user account of the first device, second prompt information is given. The second prompt information includes an identifier of the second device, and the second prompt information is used to prompt to establish the collaboration relationship between the first device and the second device.

It should be understood that in a case where the signal strength of the probe response frame is greater than the preset threshold and the user account of the second device is different from the user account of the first device, it means that the distance between the first device and the second device is relatively small, but the first device and the second device may not be electronic devices belonging to the same user, and the first device cannot directly establish the collaboration relationship with the second device. Therefore, in a case where the signal strength of the probe response frame is greater than the preset threshold and the user account of the second device is different from the user account of the first device, the first device gives the second prompt information, to prompt the user to establish the collaboration relationship between the first device and the second device through a binding authorization operation.

Based on the embodiment shown in FIG. 18, in the case where the signal strength of the probe response frame is greater than the preset threshold and the user account of the second device is the same as the user account of the first device, the establishment of the collaboration relationship between the first device and the second device can avoid interference to the first device due to a scanning discovery procedure triggered by a non-target device that has a distance with the first device beyond a certain range, thereby contributing to reduce the power consumption of the first device, to ensure the battery life of the first device.

The embodiments mentioned above are illustrations for how to establish the collaboration relationship between the first device and the second device. In some embodiments, in the related art, in a case where the collaboration relationship is established between multiple devices, the multiple devices need to maintain the collaboration relationship, thereby resulting in high energy consumption of the multiple devices. Based on this, as shown in FIG. 19, after S102, the device collaboration method may further include the following S901 and S902.

In S901, receive an eighth operation of the user on the second desktop.

In some embodiments, after the first device displays the second desktop, and in a case where the user needs to switch the first device to the first desktop, the user gives the eighth operation on the second desktop. The eighth operation is used to indicate to switch to the first desktop. Accordingly, the first device receives the eighth operation of the user on the second desktop.

As an example, the eighth operation may be a sliding operation in an opposite direction of the preset direction. For example, it is assumed that the preset direction is a right direction, and the eighth operation may be a sliding operation in a left direction.

In S902, display the first desktop and disconnect the collaboration relationship with the second device, in response to the eighth operation.

It should be understood that in a case where the user gives the eighth operation, it means that the user may need to use a certain application on the first device. At this time, the first device may disconnect the collaboration relationship with the second device, that is, the first device does not need to maintain the collaboration relationship with the second device, which contributes to reduce the power consumption of the first device and the power consumption of the second device, to ensure the battery life of the first device and the battery life of the second device.

In some embodiments, in a case where the first device detects that all screen casting applications started on the second device are closed and the first device establishes the collaboration relationship with the second device by WIFI P2P, the first device disconnects the collaboration relationship with the second device. In this way, the power consumption of the first device and the power consumption of the second device can be reduced and the battery life of the first device and the battery life of the second device can be ensured.

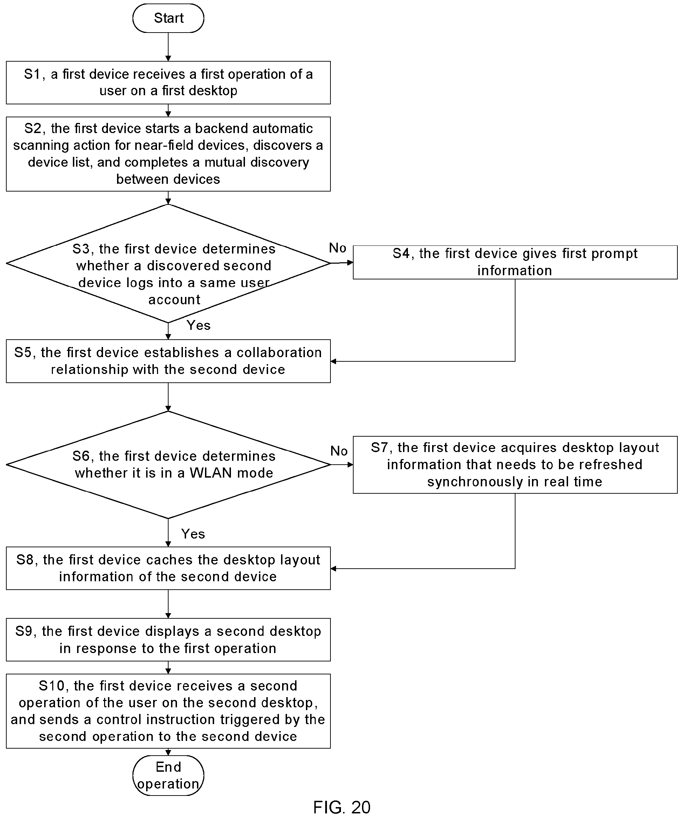

Yet another device collaboration method provided in the embodiments of the present disclosure is illustrated below in conjunction with an example. As shown in FIG. 20, the device collaboration method includes the following S1 to S10.

In S1, a first device receives a first operation from a user on a first desktop.

In some embodiments, in a case where a user needs to use multi-device collaboration work, the user may slide a screen of the first device on the screen in a preset direction, to slide to a last screen of the first device, i.e., the first desktop. Then, the user continues to try to slide the screen in the preset direction on the first desktop, so as to give the first operation. Accordingly, the first device receives the first operation of the user on the first desktop.

In S2, the first device starts a backend automatic scanning action for near-field devices, discovers a device list, and completes a mutual discovery between devices.

In S3, the first device determines whether a discovered second device logs into a same user account.

In a case where it is determined that the same user account is not logged in, the following S4 is executed. In a case where it is determined that the same user account is logged in, the following S5 is executed.

In S4, the first device gives first prompt information.

Regarding the description for the first prompt information, reference may be made to the description for the first prompt information mentioned above, which is not repeated here.

In S5, the first device establishes a collaboration relationship with the second device.

In some embodiments, after the first device establishes the collaboration relationship with the second device, the first device may acquire a desktop type and desktop layout information of the second device in the backend.

In some embodiments, after the first device establishes the collaboration relationship with the second device, the first device may also send its own desktop type and desktop layout information to the second device, so that the second device caches the desktop type and the desktop layout information of the first device.

In S6, the first device determines whether it is in a WLAN mode.

When it is determined that it is not in the WLAN mode, the following S7 is executed. When it is determined that it is in the WLAN mode, the following S8 is executed.

In S7, the first device acquires desktop layout information that needs to be refreshed synchronously in real time.

The desktop layout information that needs to be refreshed synchronously in real time includes a notification bar, a communication status icon, etc.

As an example, the first device may periodically send, to the second device, request information for acquiring the desktop layout information that needs to be refreshed synchronously in real time, to request the second device to report the desktop layout information that needs to be refreshed synchronously in real time. Then, the first device receives the desktop layout information that needs to be refreshed in real time synchronously, sent from the second device.

As another example, the second device periodically reports, to the first device, its own desktop layout information that needs to be refreshed synchronously in real time. Then, the first device receives the desktop layout information that needs to be refreshed synchronously in real time, periodically reported by the second device.

In S8, the first device caches the desktop layout information of the second device.

In this way, it is convenient that when the desktop layout information of the second device is changed, the second device only needs to send changed information to the first device, which can reduce an amount of data transmitted between the first device and the second device and the energy consumption.

In S9, the first device displays a second desktop in response to the first operation.

After the first device displays the second desktop, the second desktop includes the desktop layout information of the second device, and the user may browse applications that can be started, on the second desktop.

In S10, the first device receives a second operation of the user on the second desktop, and sends a control instruction triggered by the second operation to the second device.

In a case where the user needs to start a certain application on the second desktop, the user gives the second operation on the second desktop. Accordingly, the first device receives the second operation of the user on the second desktop, and sends the control instruction triggered by the second operation to the second device, so that the second device starts a corresponding application based on the control instruction. Then, the first device displays an application window of the application in a form of a screen casting window.

As an example, the user may select to display the application window of the application on a screen of the second device, or the user may also select to display the application window of the application on the screen casting window of the first device and on the second device in a screen mirroring mode at the same time, which is not limited in the embodiments of the present disclosure.

It should be noted that the above embodiments are explained by taking an example where the first device establishes the collaboration relationship with a second device for collaboration work, but the embodiments of the present disclosure do not limit the number of second devices. The description for that the first device establishes the collaboration relationship with multiple second devices for collaboration work may refer to the description for that the first device establishes the collaboration relationship with a second device for collaboration work, which will not be repeated here.

The above mainly introduces the solutions provided in the present disclosure in terms of interactions between respective nodes. It can be understood that, in order to implement the functions mentioned above, respective nodes, e.g., the first device, include corresponding hardware structures and/or software modules for performing respective functions. Those skilled in the art should easily recognize that the present disclosure can be implemented in a form of hardware or a combination of hardware and computer software, in conjunction with algorithm steps of the examples described in the embodiments of the present disclosure. Whether a certain function is performed by the hardware or the computer software-driven hardware depends on the specific application and restrictive conditions on the design of the technical solutions. Professional technicians may use different methods to implement the described functions for each specific application, but such implementation should not be considered beyond the scope of the present disclosure.

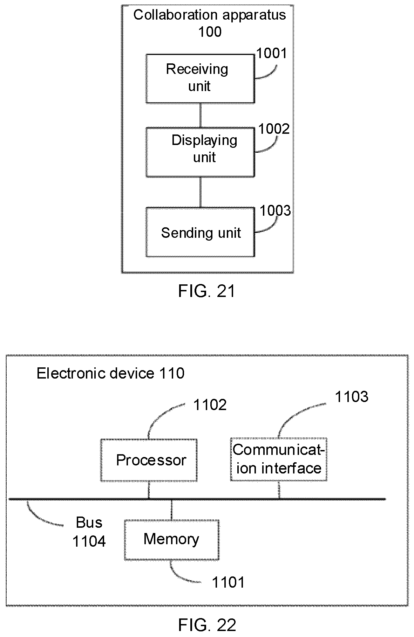

FIG. 21 shows a schematic diagram of components of a collaboration apparatus according to the embodiments of the present disclosure. As shown in FIG. 21, the collaboration apparatus 100 includes: a receiving unit 1001, and a displaying unit 1002. In some embodiments, the collaboration apparatus 100 may further include a sending unit 1003.

The receiving unit 1001 is configured to receive a first operation of a user on a first desktop. The first desktop includes desktop layout information of a first device.

The displaying unit 1002 is configured to display a second desktop in response to the first operation. The second desktop includes desktop layout information of a second device, and the second device is a device that has established a collaboration relationship with the first device.

In some embodiments, the first desktop is a last desktop of the first device in a preset direction, and the first operation includes a sliding operation in the preset direction.

In some embodiments, the second desktop is determined by the first device based on a screen display parameter of the first device and a screen display parameter of the second device, and the screen display parameter includes at least one of: a screen size, a screen resolution, or a screen pixel density.

In some embodiments, the desktop layout information includes at least one of: an icon of an application, a name of the application, a desktop background, an icon of a folder, a name of the folder, a status bar, or a notification bar.

In some embodiments, the second desktop further includes an identifier of the second device.

In some embodiments, the receiving unit 1001 is configured to receive a second operation of the user on the second desktop.

The sending unit 1003 is configured to send a control instruction triggered by the second operation, to the second device, so that the second device executes the control instruction triggered by the second operation.

In some embodiments, in a case where the first device and the second device are connected to a same local area network, the collaboration relationship is established based on the local area network; or in a case where the first device and the second device are not connected to a same local area network, the collaboration relationship is established based on a wireless fidelity peer-to-peer (WIFI P2P) protocol.

In some embodiments, the first desktop at least includes an icon of a first application, and the sending unit 1003 is further configured to send first indication information to the second device, in response to a third operation of the user to move the icon of the first application to the second desktop. The first indication information is used to indicate the second device to install the first application.

In some embodiments, the second desktop at least includes an icon of a second application, and the receiving unit 1001 is further configured to install the second application, in response to a fourth operation of the user to move the icon of the second application to the first desktop.

In some embodiments, the first desktop at least includes an icon of a third application, the second desktop at least includes an icon of a fourth application, and the third application is different from the fourth application. The displaying unit 1002 is further configured to display a start control, in response to a first selection operation of the user for the icon of the third application on the first desktop and for the icon of the fourth application on the second desktop.

The sending unit 1003 is further configured to start the third application and send second indication information to the second device, in response to a fifth operation of the user for the start control. The second indication information is used to indicate to start the fourth application.

In some embodiments, the displaying unit 1002 is further configured to display a third desktop in a case where it is detected that both the third application and the fourth application are started. The third desktop includes an application window of the third application and an application window of the fourth application.

In some embodiments, the sending unit 1003 is further configured to: select the application window of the third application and the application window of the fourth application, in response to a second selection operation of the user for the application window of the third application and the application window of the fourth application on the third desktop; and close the third application and send third indication information to the second device, in response to a sixth operation of the user on the third desktop. The third indication information is used to indicate to close the fourth application.

In some embodiments, the receiving unit 1001 is further configured to receive a seventh operation of the user on the third desktop. The seventh operation is used to adjust a size of the application window of the third application and a size of the application window of the fourth application.

The displaying unit 1002 is further configured to display a fourth desktop in response to the seventh operation. The fourth desktop includes an adjusted application window of the third application and an adjusted application window of the fourth application.

In some embodiments, the receiving unit 1001 is further configured to receive update information sent from the second device. The update information includes information about a change in the desktop layout information of the second device.

The displaying unit 1002 is further configured to update the second desktop and display an updated second desktop, based on the update information.

In some embodiments, the receiving unit 1001 is further configured to: acquire device information of the second device connected to a same local area network as the first device, where the device information of the second device includes a user account of the second device; and establish the collaboration relationship with the second device in a case where the user account of the second device is consistent with a user account of the first device.

In some embodiments, the sending unit 1003 is further configured to give a first prompt information in a case where the user account of the second device is inconsistent with the user account of the first device. The first prompt information includes an identifier of the second device, and the first prompt information is used to prompt to establish the collaboration relationship between the first device and the second device.

In some embodiments, the sending unit 1003 is further configured to send a probe request frame. The probe request frame is used to discover the second device.

The receiving unit 1001 is further configured to: receive a probe response frame. The probe response frame includes device information of the second device that sends the probe response frame, and the device information of the second device includes a user account of the second device. The collaboration relationship between the first device and the second device is established in a case where a signal strength of the probe response frame is greater than a preset threshold and the user account of the second device is the same as a user account of the first device.

In some embodiments, the sending unit 1003 is further configured to give second prompt information in a case where the signal strength of the probe response frame is greater than the preset threshold and the user account of the second device is different from the user account of the first device. The second prompt information includes an identifier of the second device, and the second prompt information is used to prompt to establish the collaboration relationship between the first device and the second device.

In some embodiments, the receiving unit 1001 is further configured to receive an eighth operation of the user on the second desktop, where the eighth operation is used to indicate to switch to the first desktop. The displaying unit 1002 is further configured to display the first desktop and disconnect the collaboration relationship with the second device, in response to the eighth operation.

It should be noted that the units in FIG. 21 may also be referred to as modules. For example, the sending unit may be referred to as a sending module. In addition, in the embodiment shown in FIG. 21, the names of the respective units may not be the names shown in the drawing. For example, the receiving unit may also be referred to as a communication unit.

The respective units in FIG. 21 may be stored in a computer-readable storage medium when the respective units are implemented in the form of software functional modules and sold or used as independent products. Based on such understanding, the technical solutions in the embodiments of the present disclosure may be essentially, or a part of the technical solutions in the embodiments of the present disclosure that contributes to the related art may be, or all or a part of the technical solutions may be embodied in the form of a software product. The computer software product is stored in a storage medium, and includes several instructions, so as to enable a computer device (which may be a personal computer, a server, or a network device, etc.) or a processor to perform all or a part of the steps of the methods of the respective embodiments of the present disclosure. The storage medium for storing the computer software product includes various mediums that may store program codes, such as a U disk (universal serial bus flash disk), a mobile hard disk, a read-only memory (ROM), a random access memory (RAM), a magnetic disk or an optical disk, etc.

In a case where the collaboration apparatus 100 mentioned above implements the functions of the integrated modules mentioned above by adopting the form of hardware, the embodiments of the present disclosure provide a structural schematic diagram of an electronic device. As shown in FIG. 22, the electronic device 110 includes a processor 1102, a communication interface 1103, and a bus 1104. In some embodiments, the electronic device 110 may further include a memory 1101.

The processor 1102 may implement or execute various illustrative logical blocks, modules and circuits described in conjunction with the contents of the present disclosure. The processor 1102 may be a central processing unit, a general-purpose processor, a digital signal processor, an application specific integrated circuit, a field programmable gate array or any other programmable logic device, a transistor logic device, a hardware component, or any combination thereof. It may implement or execute various illustrative logical blocks, modules and circuits described in conjunction with the contents of the present disclosure. The processor 1102 may also be a combination capable of implementing computing functions, for example, including a combination of one or more microprocessors, or a combination of a digital signal processor (DSP) and a microprocessor.

The communication interface 1103 is configured to connect with other devices through a communication network. The communication network may be an Ethernet, a radio access network, a wireless local area network (WLAN), or the like.

The memory 1101 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

As an implementation, the memory 1101 may exist independently of the processor 1102, and the memory 1101 may be connected to the processor 1102 through the bus 1104, for storing instructions or program codes. When calling and executing the instructions or the program codes stored in the memory 1101, the processor 1102 is capable of realizing the device collaboration method provided by the embodiments of the present disclosure.

In another implementation, the memory 1101 may be integrated with the processor 1102.

The bus 1104 may be an extended industry standard architecture (EISA) bus or the like. The bus 1104 may be classified into an address bus, a data bus, and a control bus, or the like. For the convenience of representation, only one thick line is used in FIG. 22 for representation, but it does not mean that there is only one bus or one type of bus.

From the description of the above embodiments, those skilled in the art can clearly understand that, for convenience and brevity of description, an illustration is only given by the division of functional modules mentioned above. In practical applications, the functions mentioned above may be allocated to be completed by different functional modules according to requirements. That is, the internal structure of the electronic device is divided into different functional modules to complete all or a part of the functions mentioned above.

The embodiments of the present disclosure further provide a computer-readable storage medium (e.g., a non-transitory computer-readable storage medium). All or a part of the procedures in the method embodiments mentioned above may be completed by related hardware indicated by a computer program, and the program may be stored in the computer-readable storage medium mentioned above. The program, when executed, may include the procedures of the method embodiments mentioned above. The computer readable storage medium may be an internal storage of any one of the foregoing embodiments. The computer readable storage medium mentioned above may also be an external storage device of the electronic device mentioned above, e.g., a plug-in hard disk, a smart memory card (smart media card, SMC), a secure digital (SD) card, a flash card, etc., equipped on the electronic device mentioned above. Furthermore, the computer-readable storage medium mentioned above may further include both an internal storage unit and an external storage device of the electronic device mentioned above. The computer-readable storage medium mentioned above is used to store the computer program mentioned above, and other programs and data required by the electronic device mentioned above. The computer-readable storage medium mentioned above may further be used to temporarily store data that has been output or is to be output.

The embodiments of the present disclosure further provide a computer program product, and the computer program product contains a computer program. The computer program product, when executed on a computer, causes the computer to perform any one of the device collaboration methods provided in the embodiments mentioned above.

In the technical solutions provided in the present disclosure, after a first device receives a first operation of a user on a first desktop of the first device, the first device may display a second desktop, and the second desktop includes desktop layout information of a second device that has established the collaboration relationship with the first device, so that the user may directly operate the second device on the second desktop to achieve multi-device collaboration work, which is convenient to operate and reduces the complexity of the operation when multiple devices work collaboratively.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with specific features and embodiments thereof, it is apparent that various modifications and combinations may be made thereto without departing from the spirit and scope of the present disclosure. Accordingly, the specification and drawings are merely exemplary explanation of the present disclosure as defined by the attached claims and are deemed to cover any and all modifications, variations, combinations or equivalents within the scope of the present disclosure. Obviously, those skilled in the art may make various changes and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations therein.

The above are merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure shall be determined based on the protection scope of the claims.

## Claims

1. A device collaboration method, applied to a first device, **characterized by** comprising:
receiving a first operation of a user on a first desktop, wherein the first desktop comprises desktop layout information of the first device; and
displaying a second desktop in response to the first operation, wherein the second desktop comprises desktop layout information of a second device, and the second device is a device that has established a collaboration relationship with the first device.

2. The method according to claim 1, wherein the first desktop is a last desktop of the first device in a preset direction, and the first operation comprises a sliding operation in the preset direction.

3. The method according to claim 1, wherein the second desktop is determined by the first device based on a screen display parameter of the first device and a screen display parameter of the second device, and the screen display parameter comprises at least one of: a screen size, a screen resolution, or a screen pixel density.

4. The method according to claim 1, wherein the desktop layout information comprises at least one of: an icon of an application, a name of the application, a desktop background, an icon of a folder, a name of the folder, a status bar, or a notification bar.

5. The method according to claim 1, wherein the second desktop further comprises an identifier of the second device.

6. The method according to claim 1, further comprising:
receiving a second operation of the user on the second desktop; and
sending a control instruction triggered by the second operation, to the second device, so that the second device executes the control instruction triggered by the second operation.

7. The method according to claim 1, wherein
in a case where the first device and the second device are connected to a same local area network, the collaboration relationship is established based on the local area network; or
in a case where the first device and the second device are not connected to a same local area network, the collaboration relationship is established based on a wireless fidelity peer-to-peer, WIFI P2P, protocol.

8. The method according to claim 1, wherein the first desktop at least comprises an icon of a first application, and the method further comprises:
sending first indication information to the second device, in response to a third operation of the user to move the icon of the first application to the second desktop, wherein the first indication information is used to indicate the second device to install the first application.

9. The method according to claim 1, wherein the second desktop at least comprises an icon of a second application, and the method further comprises:
installing the second application, in response to a fourth operation of the user to move the icon of the second application to the first desktop.

10. The method according to claim 1, wherein the first desktop at least comprises an icon of a third application, the second desktop at least comprises an icon of a fourth application, and the third application is different from the fourth application; and the method further comprises:
displaying a start control, in response to a first selection operation of the user for the icon of the third application on the first desktop and for the icon of the fourth application on the second desktop; and
starting the third application and sending second indication information to the second device, in response to a fifth operation of the user for the start control, wherein the second indication information is used to indicate to start the fourth application.

11. The method according to claim 10, further comprising:
displaying a third desktop in a case where it is detected that both the third application and the fourth application are started, wherein the third desktop comprises an application window of the third application and an application window of the fourth application.

12. The method according to claim 11, wherein after displaying the third desktop, the method further comprises:
selecting the application window of the third application and the application window of the fourth application, in response to a second selection operation of the user for the application window of the third application and the application window of the fourth application on the third desktop; and
closing the third application and sending third indication information to the second device, in response to a sixth operation of the user on the third desktop, wherein the third indication information is used to indicate to close the fourth application.

13. The control method according to claim 11, wherein after displaying the third desktop, the method further comprises:
receiving a seventh operation of the user on the third desktop, wherein the seventh operation is used to adjust a size of the application window of the third application and a size of the application window of the fourth application; and
displaying a fourth desktop in response to the seventh operation, wherein the fourth desktop comprises an adjusted application window of the third application and an adjusted application window of the fourth application.

14. The method according to claim 1, further comprising:
receiving update information sent from the second device, wherein the update information comprises information about a change in the desktop layout information of the second device; and
updating the second desktop and displaying an updated second desktop, based on the update information.

15. The method according to claim 1, wherein before displaying the second desktop in response to the first operation, the method further comprises:
acquiring device information of the second device connected to a same local area network as the first device, wherein the device information of the second device comprises a user account of the second device; and
establishing the collaboration relationship with the second device in a case where the user account of the second device is consistent with a user account of the first device.

16. The method according to claim 15, further comprising:
giving a first prompt information in a case where the user account of the second device is inconsistent with the user account of the first device, wherein the first prompt information comprises an identifier of the second device, and the first prompt information is used to prompt to establish the collaboration relationship between the first device and the second device.

17. The method according to claim 1, wherein before displaying the second desktop in response to the first operation, the method further comprises:
sending a probe request frame, wherein the probe request frame is used to discover the second device;
receiving a probe response frame, wherein the probe response frame comprises device information of the second device that sends the probe response frame, and the device information of the second device comprises a user account of the second device; and
establishing the collaboration relationship with the second device in a case where a signal strength of the probe response frame is greater than a preset threshold and the user account of the second device is the same as a user account of the first device.

18. The method according to claim 17, further comprising:
giving second prompt information in a case where the signal strength of the probe response frame is greater than the preset threshold and the user account of the second device is different from the user account of the first device, wherein the second prompt information comprises an identifier of the second device, and the second prompt information is used to prompt to establish the collaboration relationship between the first device and the second device.

19. The method according to claim 1, further comprising:
receiving an eighth operation of the user on the second desktop, wherein the eighth operation is used to indicate to switch to the first desktop; and
displaying the first desktop and disconnecting the collaboration relationship with the second device, in response to the eighth operation.

20. An electronic device, **characterized by** comprising: a processor and a memory;
wherein the memory has stored instructions executable by the processor; and
the processor is configured to, when executing the instructions, cause the electronic device to implement the method according to any one of claims 1 to 19.

21. A computer-readable storage medium, **characterized in that** the computer-readable storage medium comprises computer instructions, and the computer instructions, when executed on a computer, cause the computer to perform the method according to any one of claims 1 to 19.
